# EUROPÄISCHE PATENTANMELDUNG

(11) **EP 0 587 226 A2**
(43) Veröffentlichungstag der Anmeldung: **16.03.1994**
(21) Anmeldenummer: 93202537.2
(22) Anmeldetag: 31.08.1993
(51) Int. Cl.: G11B 15/675

(54) **Magnetbandkassettengerät mit einem zum Abspielen von Magnetbandkassetten dienenden Laufwerk (Führung des Lademechanismus)**

(30) Priorität: 05.09.1992 DE 4229754
(71) Anmelder: Philips Patentverwaltung GmbH, 22335 Hamburg (DE); Philips Electronics N.V., 5621 BA Eindhoven (NL)
(72) Erfinder: Scholz, Thomas, D-20097 Hamburg (DE); Koch, Stefan, D-20097 Hamburg (DE); Post, Sieghard, D-20097 Hamburg (DE)
(74) Vertreter: von Laue, Hanns-Ulrich, Dipl.-Ing.

(57) **Zusammenfassung**

Die Erfindung bezieht sich auf ein Magnetbandkassettengerät mit einem zum Abspielen von Magnetbandkassetten dienenden Laufwerk, das einen Lademechanismus aufweist, zu dem ein die Magnetbandkassette (2) aufnehmender Kassettenschacht (23) mit einer Schachtwand (23e) gehört, die eine Kassettenwand führt und aus der seitlich Bolzen (23a/b) vorstehen, die in zur Vertikalen geneigten Liftschlitzen (22b) eines Liftschiebers (22) geführt sind zum Absenken des Kassettenschachtes (23) in eine Spielposition und zu seinem Anheben in eine Auswerfposition, wobei die Liftschlitze (22b) in einer Liftwand des Liftschiebers (22) vorgesehen sind, der zwischen einer vorderen und einer hinteren Endstellung verschiebbar ist, der auf einem Teil seines Verschiebeweges den Kassettenschacht (23) mitnimmt und der in einer ersten und einer zweiten parallelen Schiene (1f, 1n) im Chassis des Gerätes verschieblich geführt ist, wobei
- die erste Schiene (1f) im Bereich der Liftwand mit den von den Bolzen (23a/b) durchgriffenen Liftschlitzen (22b) vorgesehen ist,
- die zweite Schiene (1n) unterhalb des Liftschiebers (22) in einem Abstand (A) von der ersten Schiene (1f) angeordnet ist, der kleiner ist als die Breite (B) der Magnetbandkassette (2) quer zur Schienenlängsrichtung,
- der Liftschieber (22) im Bereich der zweiten Schiene (1n) einen gleich geneigt mit den Liftschlitzen (22b) verlaufenden Liftsteg (22c) aufweist, der Mitnehmer (23h, 23k) des Kassettenschachtes (23) derart führt, daß dieser im Bereich der ersten (1f) und der zweiten (1n) Schiene jeweils in gleicher Höhenlage senk- und hebbar ist.

## Beschreibung

Die Erfindung bezieht sich auf ein Magnetbandkassettengerät mit einem zum Abspielen von Magnetbandkassetten dienenden Laufwerk, das einen Lademechanismus aufweist, zu dem ein die Magnetbandkassette aufnehmender Kassettenschacht mit einer Schachtwand gehört, die eine Kassettenwand führt und aus der seitlich Bolzen vorstehen, die in zur Vertikalen geneigten Liftschlitzen eines Liftschiebers geführt sind zum Absenken des Kassettenschachtes in eine Spielposition und zu seinem Anheben in eine Auswerfposition, wobei die Liftschlitze in einer Liftwand des Liftschiebers vorgesehen sind, der zwischen einer vorderen und einer hinteren Endstellung verschiebbar ist, der auf einem Teil seines Verschiebeweges den Kassettenschacht mitnimmt und der in einer ersten und einer zweiten parallelen Schiene im Chassis des Gerätes verschieblich geführt ist.

Aus der DE 39 14 789 A1 (PHD 89-071) ist ein derartiges Magnetbandkassettengerät mit einem zum Abspielen von Magnetbandkassetten dienenden Laufwerk bekannt, das einen Kassettenlademechanismus aufweist. Zu dem Kassettenlademechanismus gehört ein Liftschieber, der in Einzugsrichtung der Kassetten auf Schienen verfahrbar geführt ist. In dem Liftschieber befindet sich ein Kassettenschacht, der im wesentlichen aus zwei in horizontalen Ebenen auf Abstand übereinander angeordneten Leitplatten besteht, die an einer gemeinsamen Längskante über eine vertikale Führungswand miteinander verbunden sind. An der vertikalen Führungswand sind Bolzen befestigt, die nach außen vorstehen und durch Liftschlitze des Liftschieber hindurchgreifen. Die Liftschlitze haben einen gegenüber der Vertikalen geneigten Verlauf.

Das Anheben und Absenken des Kassettenschachtes erfolgt in einer Senknut einer äußeren Stützplatte, durch die die Bolzen ebenfalls hindurchgreifen. Durch eine Relativbewegung zwischen dem Liftschieber und dem Kassettenschacht erfolgt ein Anheben und Absenken des Kassettenschachtes zwischen einer Spiel- und einer Auswerfposition.

Für einen sauberen Kontakt des Magnetbandes mit dem Tonkopf ist es erforderlich, der Führung der Kassette im Lademechanismus ein besonderes Augenmerk zu widmen.

Es ist Aufgabe der Erfindung, ein Magnetbandkassettengerät der eingangs erwähnten Art zu schaffen, bei dem der Lademechanismus des Laufwerkes bei beengten Raumverhältnissen in einem Autoradio möglichst verkantsicher geführt ist.

Die gestellte Aufgabe ist erfindungsgemäß dadurch gelöst, daß
- die erste Schiene im Bereich der Liftwand mit den von den Bolzen durchgriffenen Liftschlitzen vorgesehen ist,
- die zweite Schiene unterhalb des Liftschiebers in einem Abstand von der ersten Schiene angeordnet ist, der kleiner ist als die Breite der Magnetbandkassette quer zur Schienenlängsrichtung,
- der Liftschieber im Bereich der zweiten Schiene einen gleich geneigt mit den Liftschlitzen verlaufenden Liftsteg aufweist, der Mitnehmer des Kassettenschachtes derart führt, daß dieser im Bereich der ersten und der zweiten Schiene jeweils in gleicher Höhenlage senk- und hebbar ist.

Durch das Aneinanderrücken der den Liftschieber führenden Schienen ist die Führung des Liftschieber und damit auch des Kassettenschachtes und der darin angeordneten Kassette wesentlich verbessert.

Nach einer weiteren Ausgestaltung der Erfindung ist vorgesehen, daß der Abstand der Schienen kleiner bemessen ist als der Abstand der Bolzen in der Liftwand. Damit ergeben sich besonders günstige Führungsverhältnisse.

Außer einer guten Führung der Magnetbandkassette in dem Kassettenschacht und Liftschieber kommt es darauf an, daß die Magnetbandkassette in der Spielstellung das Magnetband in der exakt vorgegebenen Lage an dem Magnetkopf vorbeiführt. Dabei spielt auch die Höhenlage eine bedeutende Rolle im Hinblick auf eine Mehrspurausführung des Magnetkopfes. Nach einer weiteren Ausgestaltung der Erfindung ist zur Verbesserung der gegenseitigen Lage von Magnetbandkassette und Magnetkopf vorgesehen, daß am Kassettenschacht in der Nähe des von einem Längsträger des Laufwerkes getragenen Magnetkopfes eine Lasche vorgesehen ist, die mit einem Niederhalter zusammenwirkt, der von dem in die Spielstellung vorfahrenden Kopfträger derart beaufschlagt wird, daß der Niederhalter über die Lasche den Kassettenschacht in die Spielstellung in der Nähe des Magnetkopfes festdrückt. Damit wird in der Spielstellung unabhängig von der genauen Führung der Magnetbandkassette innerhalb von Kassettenschacht und Liftschieber noch einmal eine Endjustierung vertikal zur Bandlaufrichtung zwischen Magnetbandkassette und Magnetkopf herbeigeführt.

Nach einer weiteren Ausgestaltung der Erfindung ist vorgesehen, daß der Niederhalter aus in einem Kniehebelgelenk miteinander verbundenen Schenkeln besteht, wobei die Mittellinien der Schenkel in der Freigabestellung einen Winkel > 180° miteinander einschließen und in der Niederhaltestellung etwa eine gerade Linie bilden. Der Niederhalter kann auf diese Weise aus dem Absenkbereich des Kassettenschachtes herausgeführt sein, bis die geradlinige steife Niederhalterverbindung des Kassettenschachtes durch die Chassisplatte durchgetaucht ist.

Nach einer weiteren Ausgestaltung der Erfindung ist vorgesehen, daß die gegenseitige Verstellung der Schenkel über das Gelenk erfolgt, das von dem Kopfträger verschoben wird. Wenn der Kopfträger selbst das Gelenk in die Niederhalteposition drückt, dann wird auch über das Verstellen der Kopfplatte nach dem Abschluß des Absenkvorganges von Kassettenschacht und Kassette die versteifende Verbindung in den Hebe- und Senkweg des Kassettenschachtes eingeführt.

Die Erfindung wird anhand der Zeichnung näher erläutert. Es zeigen:
Fig. 1 eine schaubildliche Darstellung eines Lademechanismus eines Magnetbandkassettengerätes nach der Erfindung mit einem Liftschieber und einer Magnetbandkassette in zwei verschiedenen Einfahrstellungen unter Hinweglassung des Kassettenschachtes,
Fig. 2 ein Ladegetriebe für den Lademechanismus,
Fig. 3 eine Seitenansicht des Lademechanismus,
Fig. 4 den Lademechanismus mit Magnetbandkassette, Kassettenschacht und Liftschieber in Vorderansicht bei angehobener Magnetbandkassette,
Fig. 5 die Anordnung nach Fig. 4 bei abgesenkter Magnetbandkassette und
Fig. 6 den Niederhaltermechanismus in der Nähe des Magnetkopfes.

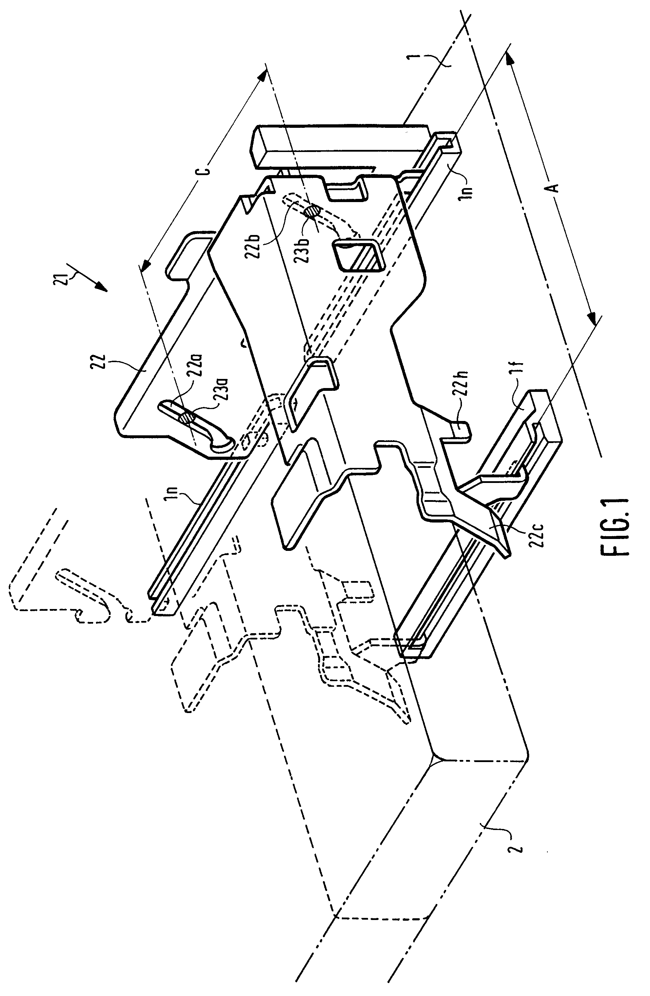

Das Laufwerk des Magnetbandkassettengerätes ist mit einem Lademechanismus 21 versehen, von dem in Fig. 1 nur ein Liftschieber 22 in zwei verschiedenen Einschubstellungen dargestellt ist. Die gestrichelt dargestellte Stellung ist die Auswerfstellung, und die ausgezogen dargestellte Stellung ist die Endstellung des Liftschiebers im Spielbetrieb. In den Liftschieber 22 ist eine schematisch angedeutete Magnetbandkassette 2 eingesetzt, ebenfalls wieder gestrichelt in der Ejectstellung und ausgezogen in der Spielstellung, allerdings vor dem Absenken zum Spielbetrieb. Der Liftschieber 22 ist verschieblich in an der Chassisplatte 1 angeordneten Schienen 1f und 1n angeordnet. Der Abstand A dieser Schienen 1f und 1n ist dem Abstand von Liftschlitzen 22b möglichst weitgehend angenähert. Dies hat zur Folge, daß sich die Schiene 1f noch unterhalb der Magnetbandkassette befindet. Auf diese Weise wird ein Verkanten des Liftschiebers und der darin letztendlich geführten Kassette soweit wie möglich vermieden.

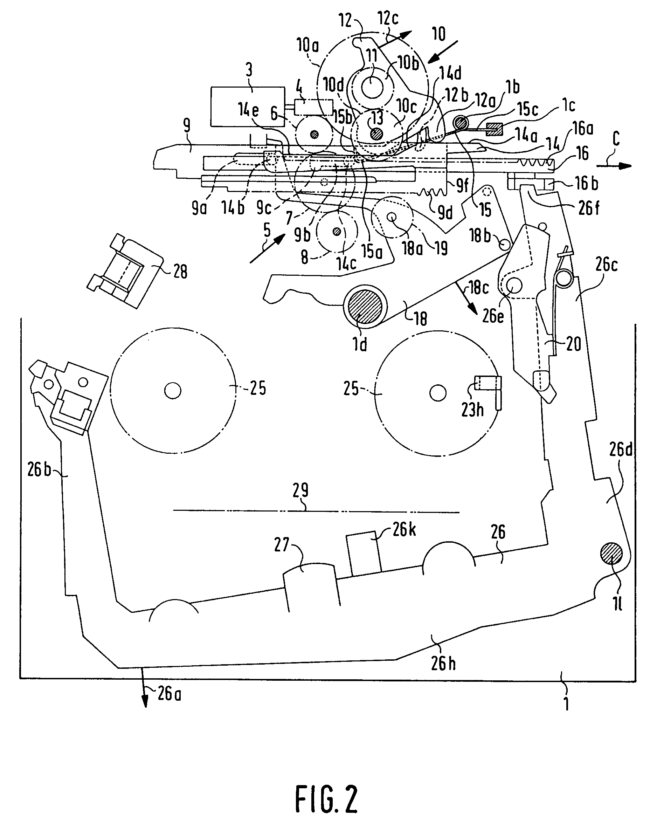

Fig. 2 zeigt die Zuordnung des Lademechanismus zu seinem Antrieb und dem Servoantrieb des Gerätes. Auf der Chassisplatte ist ein Wickelmotor 3 angeordnet, der über ein Schneckenzahnrad 4 ein Wickelgetriebe 5 mit einem Untersetzungszahnrad 6, einem Zentralzahnrad 7 und einem Übertragungszahnrad 8 antreibt. Das Wickelgetriebe 5 läuft, solange der Wickelmotor 3 umläuft.

Am Chassis 1 ist auf nicht dargestellte Weise eine Servostange 9 längsverschieblich angeordnet.

Es ist ein Ladegetriebe 10 vorgesehen, das aus drei Zahnrädern, einem Transportrad 10a, einem Zwischenrad 10b und einem Liftrad 10c besteht. Das Transportrad 10a und das Zwischenrad 10b sind miteinander starr gekoppelt über eine Welle 11, die in einem Drehhebel 12 gelagert ist. Der Drehhebel 12 selbst ist schwenkbar um eine Schwenkwelle 13 gelagert, um die auch das Liftrad 10c umlaufen kann. Der Drehhebel 12 ist auf nicht dargestellte Weise in Richtung eines Pfeiles 12c federbelastet. Der Drehhebel 12 ist mit einem Steuernocken 12a versehen, der eine Steuerkontur 14a einer Steuerstange 14 abfahren kann. Die Steuerstange 14 ist auf der Servostange 9 verschieblich gelagert. Die Servostange 9 hat dazu zwei Führungsnuten 9a, 9b, in denen Führungsstifte 14b und 14c gleiten können. Die Führungsnut 9b hat einen L-förmigen Arm 9c, in den der Führungsstift 14c einlaufen kann, wie später noch beschrieben wird. Mit dem Führungsstift 14c wirkt eine Anschlagfeder 15 zusammen, die an einem freien Ende 15a einen Anschlag 15b aufweist. Die Anschlagfeder 15 ist auf einem Stift 1b des Chassis 1 gelagert und stützt sich mit einem Federarm 15c an einem Widerlager 1c ab.

Die Steuerstange 14 hat auf ihrer Steuerkontur 14a eine Schrägfläche 14d als Übergang zu einer tiefer gelegenen Konturfläche 14e. Solange der Steuernocken 12a auf dieser Konturfläche 14e entlang läuft, sind das Untersetzungszahnrad 6 und das Transportrad 10a außer Eingriff.

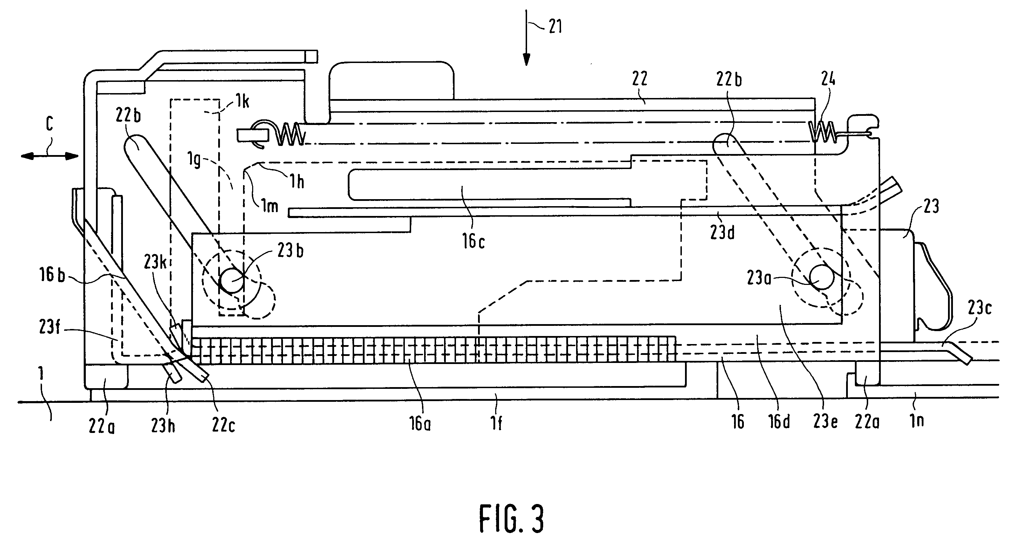

Das Liftrad 10c wirkt mit einer Liftstange 16 zusammen, der in Längsrichtung der Servostange 9 verschieblich ist und dessen Zahnung 16a mit der Zahnung 10d des Liftrades 10c kämmt. Die Liftstange 16 hat eine Schrägfläche 16b, die aus Fig. 3 deutlicher zu erkennen ist und die mit einem geneigt verlaufenden Mitnehmer 23k eines Kassettenschachtes 23 zusammenwirkt. Die Neigung entspricht der Neigung von Liftschlitzen 22b eines Liftschiebers 22.

Es ist ein Schaltorgan 18 vorgesehen, das um eine chassifeste Achse 1d schwenkbar ist. Das Schaltorgan 18 trägt mittels einer Welle 18a ein Servorad 19, welches mit einer Zahnstange 9d der Servostange 9 zusammenwirken kann. Das Schaltorgan 18 ist mittels einer nicht dargestellten Feder in Richtung eines Pfeiles 18c federbelastet.

Mit einem Stellstift 18b des Schaltorganes 18 wirkt ein Verriegelungshebel 20 zusammen. Der Verriegelungshebel 20 ist von einem Mitnehmer 23h des Kassettenschachtes 23 um einen chassisfesten Stift 26e drehbar entsprechend der Stellung des Liftschiebers 22.

Fig. 3 zeigt in Seitenansicht den Lademechanismus 21 des Laufwerkes. Es ist ein Liftschieber 22 vorgesehen, der mit Füßen 22a in den Führungsschienen 1f und 1n des Chassis 1 verschieblich geführt ist in Richtung der Servostange 9. Die Liftschlitze 22b des Liftschiebers 22 haben einen gegenüber der durch einen Pfeil C angegebenen Verschieberichtung geneigten Verlauf. In diese Liftschlitze greifen Bolzen 23a und 23b des Kassettenschachtes 23. Der Bolzen 23b greift außerdem in eine Senknut 1g ein, die zwischen einer Führungswand 1h und einer Begrenzungswand 1k gebildet ist.

Der Kassettenschacht 23 weist auf Abstand eine untere Leitplatte 23c und eine obere Leitplatte 23d auf, die über eine in der Zeichnung hinten gelegene vertikale Verbindungswand 23e, die die Bolzen 23a und 23b trägt, verbunden sind. Der Kassettenschacht 23 hat noch eine rückwärtige Anschlagwand 23f, gegen die eine Kassette beim Einschieben von Hand schiebbar ist.

Der Kassettenschacht 23 hat zwei Mitnehmer, und zwar den Mitnehmer 23h, der auch in Fig. 3 dargestellt ist, und einen Mitnehmer 23k. Beide führen zwischen sich einen Liftsteg 22c des Liftschiebers 22. Der Liftsteg 22c hat eine Neigung gegenüber der Einschubrichtung, die der Neigung der Liftschlitze 22b entspricht.

An dem Liftschieber 22 ist die Liftstange 16 in Richtung des Pfeiles C verschieblich angeordnet. Die Liftstange, die, wie die Zeichnung zeigt, nach Art eines U mit zwei Schenkeln 16c und 16d ausgebildet ist, die in Richtung der Verschieberichtung C verlaufen, trägt am unteren Schenkel 16d die Zahnstange 16a, die mit dem Liftrad 10c zusammenwirkt. Die Liftstange 16 weist außerdem die in Fig. 1 dargestellte Schräge 16b auf, die mit dem Mitnehmer 23h des Kassettenschachtes 23 zusammenwirkt.

Die Liftstange 16 ist mittels einer Feder 24 gegenüber dem Liftschieber 22 verspannt.

Bei der Darstellung nach Fig. 2 befindet sich der Betriebsmechanismus in der Ejectstellung. Dabei drückt der Steuernocken 12a gegen die Steuerkontur 14a, und das Untersetzungsrad 6 ist mit dem Transportrad 10a im Eingriff. Der Verriegelungshebel 20 hat zwar Kontakt mit dem Stellstift 18b, belastet diesen aber nicht, da er nicht von dem Mitnehmer 23h verstellt ist. Das Schaltorgan 18 ist von dem Übertragungszahnrad 8 abgerückt, und es besteht mithin kein Kontakt zwischen der Zahnstange 9d und dem Antrieb. Wohl aber ist die Zahnstange 16a mit dem Liftrad 10c im Eingriff und damit verstellbar, sobald der Motor 3 läuft.

Der Betriebsmechanismus dient nicht nur dem Antreiben des Lademechanismus und der Wickelteller 25, wie es näher in der DE 37 19 890 C1 beschrieben ist. Die Servostange hat die zusätzliche Funktion, den Kopfträger zwischen einer Stand-by- und einer Spielstellung zu verstellen. Der Kopfträger 26 ist, wie Fig. 2 zeigt, U-förmig ausgebildet und um eine Ecke 26d im Drehpunkt 1L verschwenkbar gegen eine Federvorbelastung 26a. Am Kopfträger befindet sich ein Magnetkopf, der mit einem angedeuteten Magnetband 29 in einer Magnetbandkassette zusammenwirkt. Der in der zeichnerischen Darstellung nach Fig. 2 links gelegene Schenkel 26b des Kopfträgers 26 wirkt mit einem Haltemagnet 28 zusammen. Der in der Fig. 2 rechts gelegene Schenkel 26c des Kopfträgers 26 wirkt mit seinem Anschlag 26f mit einer Kante 9f der Servostange 9 zusammen, und zwar in der Weise, daß die nach rechts verfahrene Servostange über den Anschlag 26f den Kopfträger 26 im Uhrzeigersinn verschwenkt bis zur Anlage an den Haltemagneten 28. Während des Spielbetriebes hält der Haltemagnet 28 den Kopfträger in dieser verschwenkten Stellung fest, in der das Magnetband 29 mit dem Magnetkopf 27 in Kontakt ist. Die Servostange 9 fährt allein zurück.

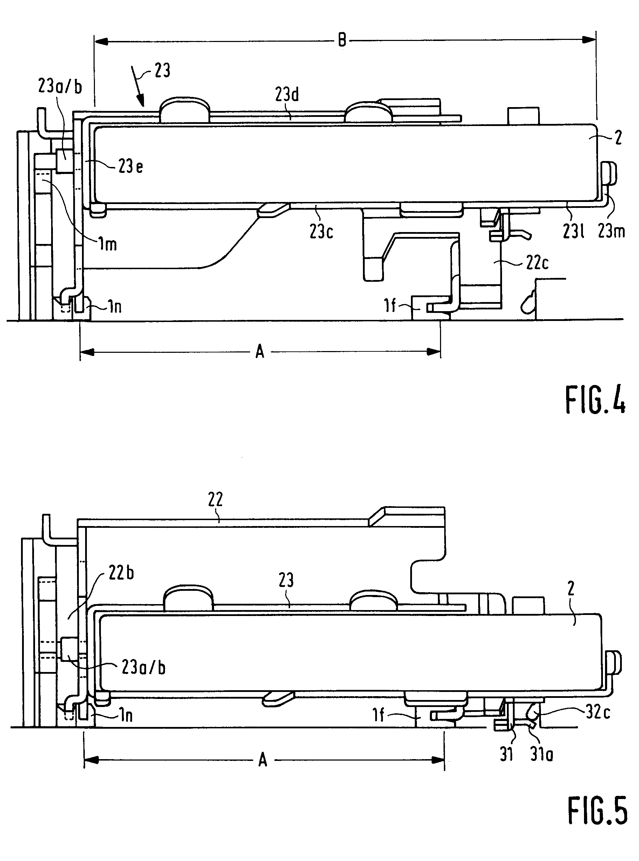

Fig. 4 zeigt den Lademechanismus in Vorderansicht bei angehobenem Kassettenschacht 23. In dem Schacht ist eine Magnetbandkassette 2 angedeutet. Der Kassettenschacht führt die Magnetbandkassette 2 zwischen der unteren Leitplatte 23c und der oberen Leitplatte 23d. Auf der linken Seite des Kassettenschachtes ist die vertikale Verbindungswand 23e zu erkennen, welche die Bolzen 23a und 23b trägt. Nach rechts begrenzt eine Begrenzungswand 23m einen Kassettenaufnahmeraum 231. In der Darstellung nach Fig. 4 laufen die Bolzen 23a und 23b über die Wand 1m hinweg.

Die Schienen 1f und 1n haben den Abstand A, und man erkennt, daß dieser Abstand deutlich kleiner ist als die Breite B der Magnetbandkassette und des Kassetttenschachtes. Die Schiene 1f läuft damit unterhalb von Kassettenschacht 23 und Kassette 2. Der Liftsteg 22c bildet auf der rechten Seite des Kassettenschachtes 23 die Stütze, die auf der linken Seite die Bolzen 23a/b bilden.

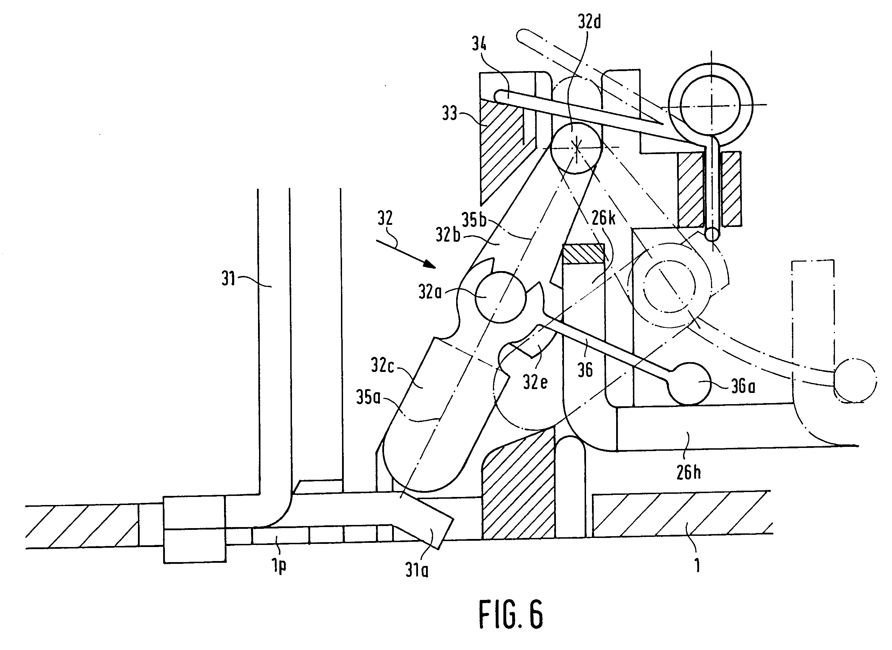

Fig. 5 zeigt den in dem Liftschieber 22 abgesenkten Kassettenschacht 23. Im Kassettenschacht befindet sich wieder die Kassette 2. Die Bolzen 23a/b sind in den Liftschlitzen 22b abwärts gefahren. Die Mitnehmer 23h und 23k sind gleichzeitig an dem Liftsteg 22c nach unten gerutscht.

Wie Fig. 6 zeigt, ist an dem Kassettenschacht 23 eine Lasche 31 angeordnet, die sich in unmittelbarer Nähe des Magnetkopfes 27 befindet, wenn der Kassettenschacht 23 niedergefahren ist. Die Lasche 31 hat eine in Richtung auf den Basisschenkel 26h des Kopfträgers weisende, nach unten abgeknickte Lippe 31a, die mit einem Niederhalter 32 zusammenwirkt. Der Niederhalter 32 ist in einer Stützvorrichtung 33 geführt. Der Niederhalter besteht aus zwei über ein Kniehebelgelenk 32a miteinander verbundenen Schenkeln 32b, 32c. Der Schenkel 32c weist einen Druckstift 32d auf, der von einer Schenkelfeder 34 in Richtung auf die Chassisplatte 1 belastet wird. Ist der Kopfträger 26 in die Spielstellung überführt, dann drückt ein Druckstück 26k gegen einen Ansatz 32e des Schenkels 32b. Damit wird der Niederhalter 32 in eine Niederhalterstellung gedrückt, in der die Mittellinien 35a und 35b der Schenkel 32c und 32b eine Linie miteinander bilden. Die Feder 34 drückt den Schenkel 32c gegen die Lippe 31a und zieht damit den Kassettenschacht 23 in der Nähe des Magnetkopfes gegen eine Auflage 1p der Chassisplatte 1. Die Stellung des Kassettenschachtes 23 in der Nähe des Magnetkopfes 27 ist damit genau festgelegt.

Fährt der Kopfträger 26 mit seinem Druckstück 26k in die Stand-by-Stellung zurück, dann federt der Niederhalter 32 in die strichpunktiert dargestellte Stellung zurück. Die Lippe 31a ist damit freigegeben, und der Schacht kann bei gewünschtem Auswerfen der Kassette an dem Schenkel 32c vorbei nach oben fahren.

Im Bereich des Kniehebelgelenkes 32a ist an dem Schenkel 32c eine biegsame Kunststoffeder 36 vorgesehen. Diese biegsame Kunststoffeder sorgt dafür, daß der Niederhalter 32 durch Mitnehmen eines Kopfes 36a beim Zurückfahren des Kopfträgers in die gestrichelt dargestellte Stellung gezogen wird.

## Patentansprüche

1. Magnetbandkassettengerät mit einem zum Abspielen von Magnetbandkassetten dienenden Laufwerk, das einen Lademechanismus aufweist, zu dem ein die Magnetbandkassette (2) aufnehmender Kassettenschacht (23) mit einer Schachtwand (23e) gehört, die eine Kassettenwand führt und aus der seitlich Bolzen (23a/b) vorstehen, die in zur Vertikalen geneigten Liftschlitzen (22b) eines Liftschiebers (22) geführt sind zum Absenken des Kassettenschachtes (23) in eine Spielposition und zu seinem Anheben in eine Auswerfposition, wobei die Liftschlitze (22b) in einer Liftwand des Liftschiebers (22) vorgesehen sind, der zwischen einer vorderen und einer hinteren Endstellung verschiebbar ist, der auf einem Teil seines Verschiebeweges den Kassettenschacht (23) mitnimmt und der in einer ersten und einer zweiten parallelen Schiene (1f, 1n) im Chassis des Gerätes verschieblich geführt ist,
dadurch gekennzeichnet, daß
- die erste Schiene (1f) im Bereich der Liftwand mit den von den Bolzen (23a/b) durchgriffenen Liftschlitzen (22b) vorgesehen ist,
- die zweite Schiene (1n) unterhalb des Liftschiebers (22) in einem Abstand (A) von der ersten Schiene (1f) angeordnet ist, der kleiner ist als die Breite (B) der Magnetbandkassette (2) quer zur Schienenlängsrichtung,
- der Liftschieber (22) im Bereich der zweiten Schiene (1n) einen gleich geneigt mit den Liftschlitzen (22b) verlaufenden Liftsteg (22c) aufweist, der Mitnehmer (23h, 23k) des Kassettenschachtes (23) derart führt, daß dieser im Bereich der ersten (1f) und der zweiten (1n) Schiene jeweils in gleicher Höhenlage senk- und hebbar ist.

2. Magnetbandkassettengerät nach Anspruch 1, dadurch gekennzeichnet, daß der Abstand (A) der Schienen (1f, 1n) kleiner bemessen ist als der Abstand (C) der Bolzen in der Liftwand.

3. Magnetbandkassettengerät nach Anspruch 1, dadurch gekennzeichnet, daß am Kassettenschacht (23) in der Nähe des von einem Kopfträger (26) des Laufwerkes getragenen Magnetkopfes (27) eine Lasche (31) vorgesehen ist, die mit einem Niederhalter (32) zusammenwirkt, der von dem in die Spielstellung vorfahrenden Kopfträger (26) derart beaufschlagt wird, daß der Niederhalter (32) über die Lasche (31) den Kassettenschacht (23) in die Spielstellung in der Nähe des Magnetkopfes (27) festdrückt.

4. Magnetbandkassettengerät nach Anspruch 3, dadurch gekennzeichnet, daß der Niederhalter (32) aus in einem Kniehebelgelenk (32a) miteinander verbundenen Schenkeln (32b, 32c) besteht, wobei die Mittellinien (35a, 35b) der Schenkel (32b, 32c) in der Freigabestellung einen Winkel < 180° miteinander einschließen und in der Niederhaltestellung etwa eine gerade Linie bilden.

5. Magnetbandkassettengerät nach Anspruch 4, dadurch gekennzeichnet, daß die gegenseitige Verstellung der Schenkel (32b, 32c) über das Kniehebelgelenk (32a) erfolgt, das von dem Kopfträger verschoben wird.
